Europäisches Patentamt

European Patent Office

Office européen des brevets

(11) Veröffentlichungsnummer: **0 308 582**

**A1**

## EUROPÄISCHE PATENTANMELDUNG

(21) Anmeldenummer: 88108224.2

(22) Anmeldetag: 24.05.88

(51) Int. Cl.4 **B65G 9/00 , F16B 17/00**

(30) Priorität: 26.08.87 CH 3269/87

(43) Veröffentlichungstag der Anmeldung:
29.03.89 Patentblatt 89/13

(84) Benannte Vertragsstaaten:
**AT BE CH DE ES FR GB GR IT LI LU NL SE**

(71) Anmelder: **JAS AG JET AGE SYSTEMS**
**Industriestrasse 14**
**CH-8302 Kloten(CH)**

(72) Erfinder: **Ulmann, Erich**
**Kirchstrasse 3**
**CH-8583 Sulgen(CH)**

(74) Vertreter: **Rottmann, Maximilian R.**
**c/o Rottmann, Maspoli + Zimmermann AG**
**Glattalstrasse 37**
**CH-8052 Zürich(CH)**

(54) **Transportwagen für eine Hängebahn.**

(57) Der Transportwagen umfasst einen langgestreckten Lastaufnahmeteil (1) und zwei im Bereich seiner Enden drehbar gelagerte Fahrgestelle (6), mit welchen er an einer Hängebahn-Schiene aufgehängt werden kann. Zur Verbindung des Lastaufnahmeteils (1) mit den Fahrgestellen (6) sind Verbindungsorgane (3) vorgesehen, die eine Aufnahmehülse (4) und eine senkrecht dazu verlaufende Lagerhülse (5) aufweisen. In die Aufnahmehülsen (4) sind die freien Enden des Lastaufnahmeteils (1) eingepresst. Damit kann der Transportwagen auf einfache, kostensparende Weise auch in Sonderlängen hergestellt werden, da das bisher übliche, zeit- und kostenintensive Anschweissen von metallischen Lagerhülsen für die Drehzapfen (12) der Fahrgestelle (6) entfällt.

FIG. 1

## TRANSPORTWAGEN FÜR EINE HÄNGEBAHN

Die vorliegende Erfindung bezieht sich auf einen Transportwagen für eine Hängebahn, mit einem langgestreckten Lastaufnahmeteil. an dessen beiden Enden je ein Fahrgestell drehbar angeordnet ist.

Derartige Hängebahnen zum Transportieren von Gütern weisen eine Schienenfahrbahn auf, die gegenüber einer Arbeitsebene erhöht in einer Transportebene verlaufend angelegt ist, insbesondere eine an bzw. im Bereich der Decke eines Arbeitsraumes verlegte Schienenfahrbahn, und eine Mehrzahl von Laufwagen, die entlang dieser Schienenfahrbahn in der Transportebene bewegbar sind. Die Schienenfahrbahn kann an vorbestimmten Stellen Abschnitte aufweisen. die aus der Transportebene heraus in den Bereich der Arbeitsebene, insbesondere in den Bereich des Fussbodens des Arbeitsraumes, absenkbar sind.

Die Transportwagen solcher Hängebahnen können z.B. einfache, stangenartige Elemente sein, die mit Fahrgestellen mit Rädern bzw. Rollen ausgerüstet sind. welche auf einer Schiene der Schienfahrbahn abrollen. Damit auch Kurven der Schienenfahrbahn durchfahren werden können, sind die Fahrgestelle gegenüber dem stangenartigen Element drehbar. An diese Transportwagen können Lastaufnahmeorgane angehängt sein. z.B. in der Form von Körben, Plattformen und dgl.. welche die zu transportierenden Güter aufnehmen, oder die Güter können direkt an den stangenartigen gestreckten Lastaufnahmeteile verrutschen konnten, so dass sie manchmal die Drehbewegung der Fahrgestelle behindert oder blokiert haben. Daher mussten im Bereich der Enden der Hohlprofilen besondere Anschlagorgane vorgesehen werden, damit die angehängten Güter oder Behälter nicht zu nahe an die Fahrgestelle rutschen konnten. Auch diese Massnahme verteuerte die Transportwagen.

Aus der DE-OS 30 19 644 ist ein Transportwagen der gattungsgemässen Art bekannt geworden, der eine Traverse aufweist, die im Bereich ihrer beiden Enden mit Bohrungen zur drehbaren Aufnahme je eines Fahrgestells versehen ist. Nach der Lehre dieser Druckschrift ist es aber nicht möglich, auf einfache Weise vor Ort Transportwagen in beliebiger Grösse aus vorfabrizierten Fahrgestellen und vor Ort abgeschnittenem Stangenmaterial herzustellen. weil die Stangen bzw. Traversen mit endseitigen Bohrungen und, will man die Leichtgängigkeit der Drehbewegung der Fahrgestelle mit geringem Spiel auch längerfristig sicherstellen, mit Lagerbüchsen versehen werden müssen. Ausserdem müssen an den Traversen separate Endanschläge angebracht werden. um eine allfällige Behinderung der Drehbewegung der Fahrgestelle durch verrutschende Ladung zu vermeiden.

Es ist die Aufgabe der vorliegenden Erfindung. die Konstruktion der Transportwagen der eingangs genannten Art dahingehend zu verbessern, dass nicht mehr geschweisst werden muss, dass ohne Mehraufwand, insbesondere in etwa zu gleichen Kosten. auch Transportwagen in Sonderlängen hergestellt werden können, und dass sich das Anbringen von separaten Endanschlägen an den langgestreckten Lastaufnahmeteilen erübrigt.

Gemäss der Erfindung wird diese Aufgabe dadurch gelöst. dass zur Verbindung zwischen Fahrgestell und Lastaufnahmeteil ein Verbindungsorgan vorgesehen ist, das eine Aufnahmehülse mit geringfügig grösserem Aussenquerschnitt als der Lastaufnahmeteil aufweist. wobei das lastseitige Ende der Aufnahmehülse als Anschlag ausgebildet ist.

Damit ist erreicht, dass für die langgestreckten Lastaufnahmeteile Hohlprofil-Meterware verwendet werden kann; die benötigte Länge wird vom Vorratsprofil abgeschnitten und die Verbindungsorgane, gegebenenfalls bereits schon mit vormontierten Fahrgestellen, werden einfach auf die beiden Enden des Profilabschnittes aufgepresst. So erübrigt sich eine Vorfabrikation sowie eine mit Kosten verbundene Lagerhaltung von diversen Standardlängen (z.B. 600mm 800mm 1000mm). Schliesslich ist auch zu erwähnen. dass eine Vormontage der Fahrgestelle inklusive der zugeordneten Lagerhülse bei der bisherigen Schweisskonstruktion kaum oder gar nicht möglich war.

Im Interesse einer hohen Belastbarkeit kann es sich empfehlen, dass die Aufnahmehülse an ihren Aussenseiten mit einstückig angeformten Verstärkungsrippen versehen ist. die im wesentlichen achsparallel zur Aufnahmehülse verlaufen.

Damit das Verbindungsteil leicht montiert werden kann. ohne dass an die Formgebungs-Präzision allzu hohe Anforderungen gestellt werden müssen. und damit trotzdem ein fester, präziser Sitz des langgestreckten Tragelementes in der zugeordneten Aufnahmehülse gegeben ist. kann der lichte Innenquerschnitt der Aufnahmehülse geringfügig grösser als der Aussenquerschnitt des Lastaufnahmeteils sein, wobei aber die Innenseite der Aufnahmehülse mit über die Oberfläche vorstehenden Längsrippen versehen ist. Die Verbindungsorgane bestehen dabei vorzugsweise aus Kunststoff.

Zwar sind formschlüssige Verbindungen ähnlicher Art zwischen zwei Bauteilen z.B. aus der DE-OS 34 47 036 bekannt. Diese dienen jedoch im allgemeinen dazu, beide Bauteile ohne Zusatzeinrichtungen bis zur endgültigen Befestigung provisorisch zu fixieren.

Im folgenden wird ein Ausführungsbeispiel des erfindungsgemässen Transportwagens, unter Bezugnahme auf die beiliegenden Zeichnungen, näher erläutert. In den Zeichnungen zeigen:

Fig. 1 eine schematische, teilweise aufgeschnittene Seitenansicht eines Transportwagens;

Fig. 2 eine Ansicht eines Verbindungsorganes von der Fahrgestellseite her;

Fig. 3 einen Schnitt durch ein Verbindungsorgan nach der Linie III-III in Fig. 1; und

Fig. 4 einen Schnitt durch ein Verbindungsorgan nach der Linie IV-IV in Fig. 2.

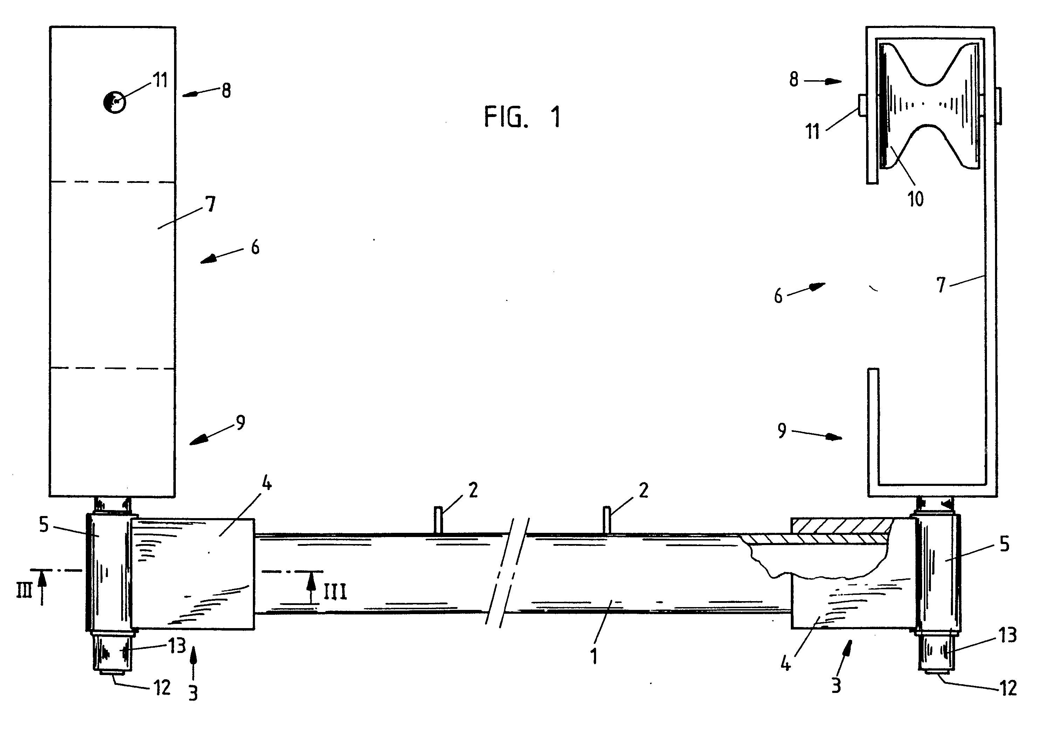

Gemäss Fig. 1 besitzt der Transportwagen einen langgestreckten Lastaufnahmeteil 1, der z.B. durch eine im Querschnitt ovales Stahlhohlprofil gebildet sein kann. Am Lastaufnahmeteil 1 können Blockierstifte 2 vorhanden sein, die ein Verrutschen von im Bereich der Mitte angehängter Güter vermeiden bzw. begrenzen. An den beiden Enden des Lastaufnahmeteils 1 ist je ein Verbindungsorgan angebracht, das gasamthaft mit 3 bezeichnet ist. Jedes Verbindungsorgan 3 umfasst im wesentlichen eine Aufnahmehülse 4 für den Lastaufnahmeteil 1 und eine senkrecht dazu verlaufende, zylindrische Lagerhülse 5 für das Fahrgestell. Letzteres ist gesamthaft mit 6 bezeichnet und weist einen Rahmen 7 auf, dessen beide Endbereiche 8 und 9 zweimal rechtwinklig abgebogen sind. Im oberen Endbereich 8 ist eine Rolle 10 mittels einer Welle 11 drehbar gelagert; diese Rolle 10 wälzt sich auf der (nicht gezeigten) Schiene einer Hängefahrbahn ab.

Der untere Endbereich 9 des Fahrgestells 6 ist mit einem Drehzapfen 12 versehen, der in der Lagerhülse 5 Aufnahme findet. Eine Muffe 13 sorgt dafür, dass das Verbindungsorgan 3 nicht vom Drehzapfen abgleiten kann.

In der Fig. 1 sind die beiden Fahrgestelle 6 zwecks besserer Anschaulichkeit in zwei verschiedenen, gegeneinander um 90° verdrehten Positionen gezeigt. Es versteht sich, dass die Drehgestelle im Normalfall (bei Geradeausfahrt) gleich ausgerichtet sind bzw. sich bei Kurvenfahrt selbsttätig gegensinnig um einen geringen Winkel verdrehen.

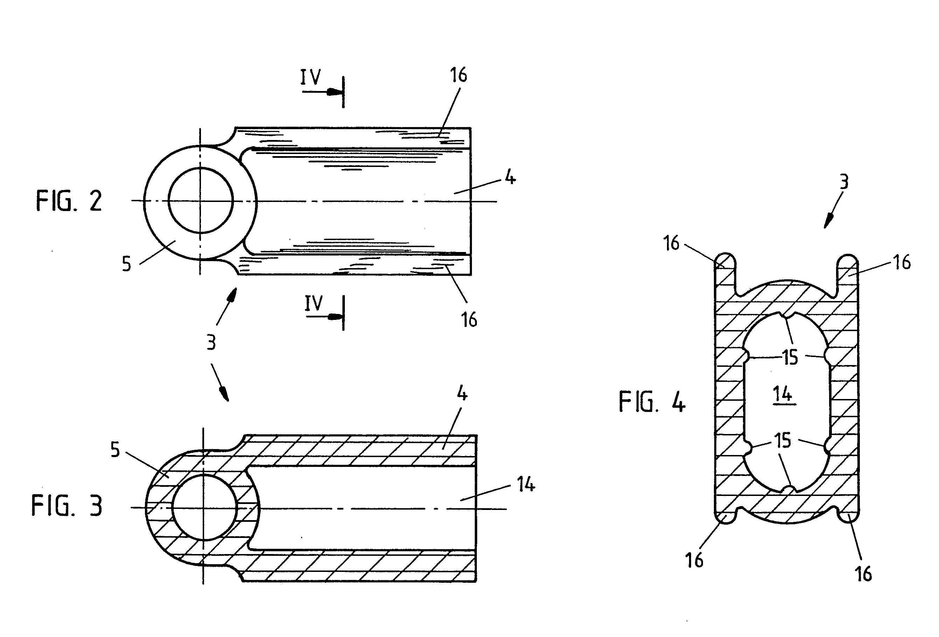

Wie aus den Fig. 2-4 entnommen werden kann, begrenzt die Aufnahmehülse 4 einen einseitig offenen Hohlraum 14, in den das zugeordnete Ende des Lastaufnahmeteils 1 eingepresst wird. Die Querschnittsform des Hohlraumes 14 entspricht dabei dem Querschnitt des als Lastaufnahmeteil 1 dienenden Hohlprofiles, und der lichte Querschnitt des Hohlraumes 14 ist geringfügig grösser als der Aussenquerschnitt des Hohlprofiles des Lastaufnahmeteiles 1. Damit dennoch, bei einfacher Einführbarkeit des Profils, ein fester Sitz des Lastaufnahmeteils 1 in der Aufnahmehülse 4 gewährleistet ist, besitzt die Innenwandung des Hohlraumes 14 eine Anzahl von vorstehenden Längsrippen 15, die achsparallel zum Lastaufnahmeteil 1 verlaufen.

Zweckmässigerweise bestehen die Verbindungsorgane 3 aus Kunststoff; damit trotzdem die erforderliche Belastbarkeit und Steifigkeit gewährleistet ist bzw. vergrössert wird, sind an den Aussenseiten der Aufnahmehülse 4 achsparallel zum Lastaufnahmeteil 1 verlaufende Verstärkungsrippen 16 angeformt.

Die Wände der Aufnahmehülse 4 und insbesondere die Verstärkungsrippen 16 stehen über die Oberfläche des Lastaufnahmeteils hervor und bilden so einen Anschlag, der verhindert, dass am Lastaufnahmeteil 1 lose aufgehängte, im Bereich der Enden desselben befindliche Stückgüter allzusehr in die Nähe der Fahrgestelle gelangen und so deren Beweglichkeit behindern können.

Mit dem erfindungsgemässen Transportwagen ist eine Konstruktion mit stark reduzierten Herstellungskosten sowie Lager- und Logistikaufwand geschaffen, die auch leicht an Sonderlängen angepasst werden kann, ohne dass eine Verteuerung eintritt. Die als Kunststoffteile ausgebildeten Verbindungsorgane bedeuten zwar einen Materialmehraufwand; sie sind aber so preisgünstig, dass dieser Aufwand durch den Wegfall des sonst üblichen, jetzt aber eingesparten Anschweissens von Lagerhülsen an den Lastaufnahmeteil preislich mehr als kompensiert wird. Ausserdem ist der Zeitaufwand für die Montage der Transportwagen deutlich geringer als bei bisher bekannten Konstruktionen. Zusammengefasst lassen sich als wesentliche Vorteile nennen:

- Keine Lagerhaltung erforderlich.
- Keine Vorfabrikation nötig.
- Wegfall der Lagerkosten.
- Keine Kapitalbindung.

**Ansprüche**

1. Transportwagen für eine Hängebahn, mit einem langgestreckten Lastaufnahmeteil (1), an dessen beiden Enden je ein Fahrgestell (6) drehbar angeordnet ist, dadurch gekennzeichnet, dass zur Verbindung zwischen Fahrgestell (6) und Lastaufnahmeteil (1) ein Verbindungsorgan (3) vorgesehen ist, das eine Aufnahmehülse (4) mit geringfügig grösserem Aussenquerschnitt als der Lastaufnahmeteil (1) aufweist, wobei das lastseitige Ende der Aufnahmehülse (4) als Anschlag ausgebildet ist.

2. Transportwagen nach Patentanspruch 1, dadurch gekennzeichnet, dass die Aufnahmehülse (4) an ihren Aussenseiten mit einstückig angeformten Verstärkungsrippen (16) versehen ist, die im wesentlichen achsparallel zur Aufnahmehülse (4) verlaufen.

3. Transportwagen nach Patentanspruch 1 oder 2, dadurch gekennzeichnet, dass die Aufnahmehülse (4) aus Kunststoff besteht und dass der lichte Innenquerschnitt der Aufnahmehülse (4) geringfügig grösser als der Aussenquerschnitt des Lastaufnahmeteils (1) ist, wobei die Innenfläche der Aufnahmehülse (4) mit über die Oberfläche vorstehenden Längsrippen (15) versehen ist.

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 044 967 (ALEXANDRE Ltd)<br>* Seite 2, Zeilen 30-56; Figur 4 *<br>--- | 1 | B 65 G   9/00<br>F 16 B  17/00 |
| D,A | DE-A-3 447 036 (AUDI)<br>* Insgesamt *<br>----- | 3 | |

RECHERCHIERTE
SACHGEBIETE (Int. Cl.4)

B 65 G
F 16 B

Der vorliegende Recherchenbericht wurde für alle Patentansprüche erstellt

| Recherchenort | Abschlußdatum der Recherche | Prüfer |
|---|---|---|
| DEN HAAG | 28-11-1988 | OSTYN T.J.M. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................................
& : Mitglied der gleichen Patentfamilie, übereinstimmendes
    Dokument